# FASCICULE DE BREVET EUROPEEN

(11) **EP 3 359 506 B1**
(45) Date de publication et mention de la délivrance du brevet: **09.02.2022**
(21) Numéro de dépôt: 16790654.4
(22) Date de dépôt: 04.10.2016
(51) Int. Cl.: C04B 35/117, F01D 5/28, D03D 15/00, B28B 7/34, B28B 1/26, B28B 1/24, C04B 35/80, C04B 35/584, C04B 35/58, C04B 35/565, C04B 35/488, C04B 35/447, C04B 35/185, C04B 35/18, C04B 35/14, B28B 23/00, C04B 35/626, D03D 1/00, D03D 11/00, D03D 25/00

(54) **PROCÉDÉ DE FABRICATION D'UNE PIÈCE EN MATÉRIAU COMPOSITE CÉRAMIQUE PAR INJECTION SOUS PRESSION D'UNE BARBOTINE CHARGÉE DANS UN MOULE POREUX**
VERFAHREN ZUR HERSTELLUNG EINES KERAMIK-VERBUNDWERKSTOFFS DURCH EINSPRITZEN EINES GEFÜLLTEN SCHLICKERS IN EINER PORÖSEN FORM
PROCESS FOR THE MANUFACTURING OF A CERAMIC COMPOSITE PART BY INJECTION OF A LOADED SLURRY IN A POROUS MOULD

(30) Priorité: 05.10.2015 FR 1559430
(43) Date de publication de la demande: 15.08.2018
(73) Titulaire: SAFRAN AIRCRAFT ENGINES, 75015 Paris (FR); SAFRAN, 75015 Paris (FR)
(72) Inventeur: DROZ, Nicolas, 77550 Moissy-Cramayel Cedex (FR); LIAIS, Ludovic Philippe, 77550 Moissy-Cramayel Cedex (FR); PAIXAO, Adrien, 77550 Moissy-Cramayel Cedex (FR); PODGORSKI, Michael, 77550 Moissy -Cramayel (FR); HAIFI, Sofia, 77550 Moissy-Cramayel Cedex (FR)
(74) Mandataire: Cabinet Beau de Loménie
(86) Numéro de dépôt international: PCT/FR2016/052535
(87) Numéro de publication internationale: WO 2017/060601

(56) Documents cités:
- EP-A1- 2 357 070
- WO-A1-2010/049961
- WO-A1-2016/102839
- FR-A1- 2 359 803
- FR-A1- 2 702 475
- US-A- 5 436 042

## Description

### Arrière-plan de l'invention

La présente invention concerne un procédé de fabrication d'une pièce en matériau composite notamment de type oxyde/oxyde ou à matrice céramique (CMC), c'est-à-dire comportant un renfort fibreux formé à partir de fibres en matériau céramique réfractaire densifié par une matrice également en matériau céramique réfractaire.

Les pièces en matériau composite oxyde/oxyde sont généralement élaborées par drapage dans un moule d'une pluralité de strates fibreuses réalisées à partir de fibres en oxyde réfractaire, les strates étant chacune préalablement imprégnées avec une barbotine chargée de particules d'oxyde réfractaire. L'ensemble des strates ainsi disposées est ensuite compacté à l'aide d'un contre-moule ou d'une bâche à vide et un passage en autoclave. La préforme chargée ainsi obtenue est alors soumise à un frittage afin de former une matrice en oxyde réfractaire dans la préforme et obtenir une pièce en matériau composite oxyde/oxyde. Cette technique peut être également utilisée pour réaliser des pièces en matériau composite à matrice céramique (CMC). Dans ce cas, les strates fibreuses sont réalisées à partir de fibres de carbure de silicium (SiC) ou de carbone et sont imprégnées avec une barbotine chargée de particules de carbure (ex. SiC), de borure (ex. TiB₂) ou de

nitrure (ex. Si₃N₄). Cependant, ce type de procédé d'élaboration ne permet de réaliser que des pièces en matériau composite oxyde/oxyde ou CMC ayant une faible épaisseur et un renfort fibreux bidimensionnel (2D). Les caractéristiques mécaniques de ces types de matériau composite restent limitées dans certaines directions. En particulier, ces matériaux ont une faible tenue au délaminage et ne résistent pas bien aux efforts de cisaillement.

La réalisation de textures fibreuses obtenues par tissage tridimensionnel entre des fils continus de chaîne et de trame permet d'augmenter la résistance mécanique du matériau et en particulier sa résistance au délaminage. Dans ce cas et également pour des textures fibreuses 2D de forte épaisseur, seuls les procédés utilisant un gradient de pression, comme les procédés de type infusion, moulage par injection dits « RTM » ou aspiration de poudre submicronique dits « APS », permettent de faire pénétrer une barbotine chargée dans la texture fibreuse dont l'épaisseur peut atteindre plusieurs dizaines de millimètres selon les applications visées. Cependant, le gradient de pression entre la partie de la texture fibreuse par laquelle la barbotine chargée est injectée et l'autre partie de la texture fibreuse par laquelle la phase liquide de la barbotine doit être évacuée est difficile à contrôler sur l'ensemble de la texture fibreuse. Si la pression n'est pas équilibrée sur l'ensemble de la surface de la texture fibreuse en regard du fond du moule comportant un ou plusieurs évents d'évacuation par lequel ou lesquels la phase liquide de la barbotine doit être évacuée, il se crée une différence de pression entre les zones proches des évents et les zones plus éloignées. Dans ce cas, l'évacuation de la phase liquide est délicate car celle-ci doit être retirée de la texture sans perturber la répartition des particules solides (oxyde réfractaire, carbure, borure, nitrure, etc.) déposées via la barbotine. En effet, lors de son évacuation, la phase liquide peut emmener avec elle des particules et/ou modifier la répartition de ces dernières dans la texture fibreuse et conduire à l'apparition d'importantes porosités dans le matériau final en raison du manque de matrice à certains endroits. On connaît également des procédés de coulage en barbotine : US 5 436 042 A décrit la production de composants en matériau CMC utilisables pour des turbines et divulgue une méthode comprenant le placement d'une ébauche fibreuse (en SiC) dans un moule poreux en plâtre, l'introduction d'une barbotine aqueuse comprenant des particules de SiC, le drainage des liquides par capillarité, séchage, démoulage et frittage. WO 2010/049961 A1 décrit la production de composants en matériau CMC utilisables pour l'industrie aérospatiale et divulgue un procédé comprenant les étapes de façonnement d'une ébauche fibreuse ; placement dans un moule en plâtre ; injection d'une solution comprenant des particules de céramiques ; drainage du liquide de ladite solution par capillarité ; démoulage ; et frittage.

### Objet et résumé de l'invention

La présente invention a pour but de remédier aux inconvénients précités et de proposer une solution qui permet de réaliser des pièces en matériau composite notamment de type oxyde/oxyde ou CMC à partir d'une texture fibreuse épaisse et/ou de géométrie complexe, et ce de manière rapide et fiable tout en permettant un bon contrôle du dépôt et de la répartition des particules solides dans la texture fibreuse afin d'obtenir un matériau avec un taux de macroporosité très faible.

A cet effet, l'invention propose un procédé de fabrication d'une pièce en matériau composite comprenant les étapes suivantes :
- formation d'une texture fibreuse à partir de fibres céramiques réfractaires,
- placement de la texture fibreuse dans un outillage d'injection,
- injection sous pression d'une barbotine contenant une poudre de particules céramique réfractaires dans la texture fibreuse,
- drainage du liquide de la barbotine ayant traversé la texture fibreuse et rétention de la poudre de particules céramiques réfractaires à l'intérieur de ladite texture de manière à obtenir une préforme fibreuse chargée de particules réfractaires,
- séchage de la préforme fibreuse,
- démoulage de la préforme fibreuse, et
- frittage des particules céramiques réfractaires présentes dans la préforme fibreuse afin de former une matrice réfractaire dans ladite préforme,
caractérisé en ce que l'outillage d'injection comprend un moule en matériau poreux comportant un logement interne dans lequel la texture fibreuse est placée, la barbotine étant injectée dans la texture fibreuse par au moins un port d'injection présent sur l'outillage d'injection et débouchant dans le logement interne du moule en matériau poreux, l'outillage comprenant en outre une enceinte en matériau rigide dans laquelle le moule en matériau poreux est maintenu pendant l'injection sous pression de la barbotine et le drainage du liquide de ladite barbotine, le liquide de la barbotine étant évacué par au moins un évent présent sur l'enceinte en matériau rigide.

En utilisant un moule en matériau poreux, le procédé de l'invention permet d'éliminer la phase liquide de la barbotine introduite dans la texture fibreuse sans éliminer les particules solides réfractaires également présentes dans la texture. En outre, le moule en matériau poreux entourant toute la texture fibreuse, le liquide de la barbotine peut être drainé hors de ladite texture dans toutes les directions, c'est-à-dire en tout point de l'interface entre la texture et le moule. Cela permet de favoriser un dépôt par sédimentation homogène et dense des particules céramiques réfractaires dans la texture fibreuse et d'obtenir, par conséquent, un taux volumique de matrice élevé dans la pièce finale en matériau composite et d'augmenter de manière significative le temps de drainage. La pièce en matériau composite présente, par conséquent, des propriétés mécaniques améliorées.

En outre, le moule en matériau poreux étant maintenu dans une enceinte en matériau rigide, celui-ci peut résister aux pressions d'injection de la barbotine chargée dans la texture ainsi qu'à celles exercées par un pompage pour l'évacuation du milieu liquide de la barbotine.

Selon une caractéristique particulière du procédé de l'invention, le moule en matériau poreux présente une taille inférieure au volume interne de l'enceinte en matériau rigide, le volume présent entre le moule en matériau poreux et l'enceinte en matériau rigide étant comblé par un milieu compact poreux. L'utilisation d'un milieu poreux facilite notamment l'intégration du moule en matériau poreux dans l'outillage d'injection en épousant tout type de forme de moule même complexe tout en assurant un bon transfert des efforts entre le moule et l'enceinte de l'outillage d'injection. Ce transfert permet de s'assurer la montée en pression sans déformation du moule poreux. Les problèmes d'étanchéité sont ainsi considérablement diminués. Par ailleurs, la présence d'un milieu poreux autour du moule permet de mieux évacuer le liquide de la barbotine hors du moule en matériau poreux, facilitant ainsi son nettoyage après chaque injection et, par conséquent, sa réutilisation.

Le volume de vide présent dans le milieu poreux est de préférence supérieur au volume de la phase liquide de la barbotine injectée dans la texture fibreuse.

Le milieu poreux peut être constitué notamment de sable d'une mousse, ou de tout matériau granulaire ayant un taux d'empilement permettant de ménager un logement ou passage au filtrat.

Selon un aspect particulier du procédé de l'invention, le moule peut être en un matériau choisi parmi au moins un des matériaux suivants : résine poreuse et plâtre.

Lors de l'étape de la formation de la texture fibreuse, les fils peuvent être tissés suivant un tissage tridimensionnel ou multicouche. La texture fibreuse peut être également réalisée par empilement de strates tissées suivant un tissage bidimensionnel, la texture présentant une épaisseur d'au moins 0,5 mm et de préférence d'au moins 1 mm.

Les fils de la préforme peuvent être des fils formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être en un matériau choisi parmi : l'alumine, la mullite, la silice, un aluminosilicate, un aluminophosphate, la zircone, un carbure, un borure et un nitrure.

Dans un exemple de réalisation, la pièce en matériau composite obtenue peut constituer une aube de turbomachine.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective éclatée d'un outillage d'injection conformément à un mode de réalisation de l'invention,
- la figure 2 est une vue schématique en coupe montrant l'outillage de la figure 1 fermé avec une texture fibreuse positionnée dans celui-ci,
- la figure 3 est une vue schématique en coupe montrant les étapes d'imprégnation d'une texture fibreuse avec une barbotine chargée dans l'outillage de la figure 2.

### Description détaillée de modes de réalisation

Le procédé de fabrication d'une pièce en matériau composite notamment de type oxyde/oxyde ou CMC conforme à la présente invention débute par la réalisation d'une texture fibreuse destinée à former le renfort de la pièce.

La structure fibreuse est réalisée de façon connue par tissage au moyen d'un métier à tisser de type jacquard sur lequel on a disposé un faisceau de fils de chaîne ou torons en une pluralité de couches, les fils de chaîne étant liés par des fils de trame ou inversement. La texture fibreuse peut être réalisée par empilement de strates ou plis obtenus par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Le procédé de l'invention est particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D présentent une géométrie complexe dans laquelle il est difficile d'introduire et de répartir de manière homogène des particules solides en suspension. Le procédé de l'invention est également très bien adapté pour l'introduction d'une barbotine chargée dans des textures fibreuses tissées 3D.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

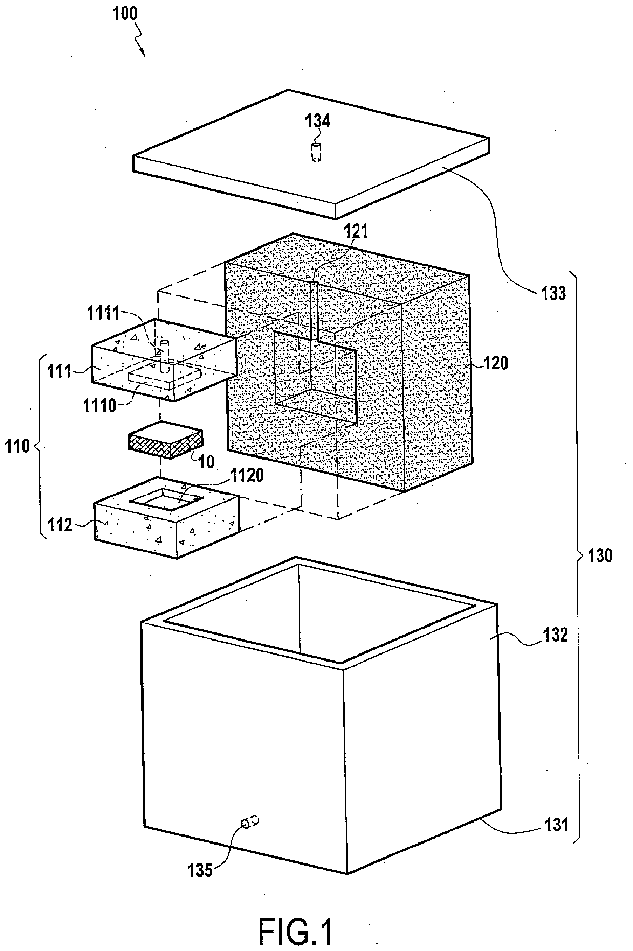

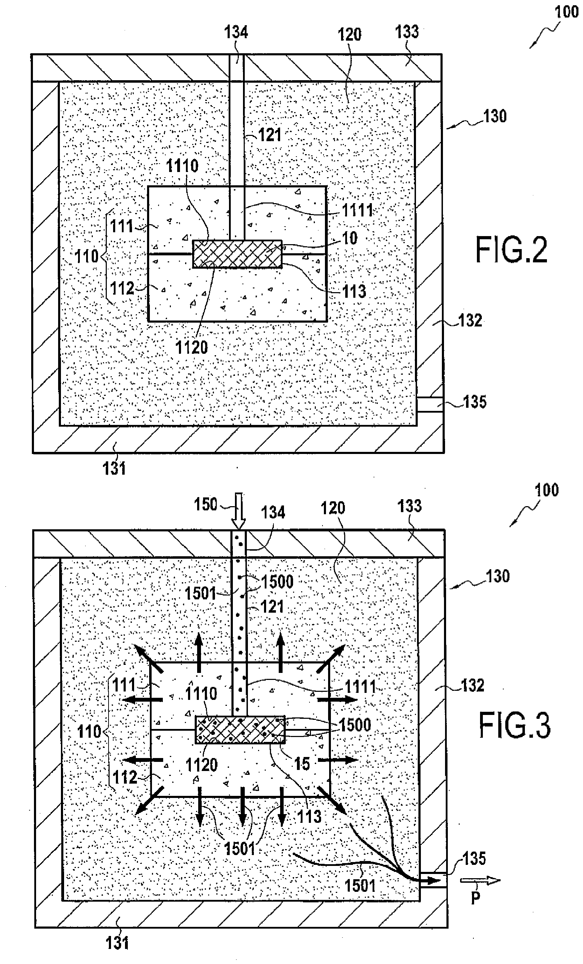

Une fois la texture fibreuse réalisée, celle-ci est placée dans un outillage d'injection conforme à l'invention qui permet, comme expliqué ci-après, de déposer des particules réfractaires au sein de la texture fibreuse. A cet effet et comme illustrée sur les figures 1 et 2, une texture fibreuse 10 est placée dans un outillage d'injection 100. Dans l'exemple décrit ici, la texture fibreuse 10 est réalisée suivant une des techniques définies ci-avant (empilement strates 2D ou tissage 3D) avec des fils d'alumine Nextel 610^{™}. La texture fibreuse 10 est ici destinée à former le renfort fibreux d'une aube en matériau composite oxyde/oxyde.

L'outillage 100 comprend un moule en matériau poreux 110 formé en deux parties 111 et 112 comportant chacune respectivement une empreinte 1110 et une empreinte 1120. Les empreintes 1110 et 1120 délimitent une cavité de moulage 113 (figure 2) lorsque les deux parties 111 et 112 sont assemblées l'une contre l'autre, cavité dans laquelle la texture fibreuse est destinée à être placée. Les empreintes 1110 et 1120 présentent une forme correspondant à la forme de la pièce à fabriquer à partir de la texture fibreuse. Les deux parties 111 et 112 servent à dimensionner la préforme et donc la pièce à obtenir ainsi qu'à ajuster le taux de fibres dans la pièce à obtenir.

Dans l'exemple décrit ici, la partie 111 du moule en matériau poreux 110 comporte un canal 1111 pour l'injection d'une barbotine chargée dans la texture fibreuse comme expliqué ci-après en détails.

L'outillage d'injection 100 comprend également une enceinte en matériau rigide 130 dans laquelle le moule en matériau poreux 110 est maintenu. L'enceinte 130 comprend un fond 131, une paroi latérale 132 solidaire du fond 131 et un couvercle 133. L'enceinte 130 peut être réalisée avec tout type de matériau présentant une rigidité suffisante pour résister aux pressions d'injection de la barbotine et au pompage (tirage du vide) pour l'évacuation de la phase liquide de celle-ci. L'enceinte peut être notamment réalisée en matériau métallique ou plastique.

Le couvercle 133 comporte un port d'injection 134 au travers duquel la barbotine est destinée à être injectée afin de pénétrer dans la porosité de la texture fibreuse 10. Dans l'exemple illustré aux figures 1 et 2, la barbotine est destinée à être injectée au travers d'un port d'injection 134 débouchant dans la cavité de moulage 113. Toutefois, on ne sort pas du cadre de l'invention lorsque la barbotine est injectée au travers d'une pluralité de ports d'injection débouchant dans la cavité de moulage.

L'enceinte 130 comporte un unique évent d'évacuation 135 du milieu liquide de la barbotine, présent ici sur la paroi latéral 132 au voisinage du fond 131. Bien entendu, on ne sort pas du cadre de l'invention lorsqu'une pluralité d'évents de sortie est mise en oeuvre à différents endroits de l'enceinte.

Dans le mode de réalisation décrit ici, le moule en matériau poreux 110 présente une taille inférieure au volume interne de l'enceinte en matériau métallique 130. Dans ce cas, le volume présent entre le moule en matériau poreux et l'enceinte en matériau métallique est comblé par un milieu poreux 120 afin de permettre la circulation et l'évacuation de la phase liquide de la barbotine. Le milieu poreux 120 peut être constitué notamment par du sable une mousse, ou un matériau granulaire. Concernant la mousse, tout type de mousse, rigide ou souple, qui présente un réseau de porosité permettant le passage du milieu liquide de la barbotine peut être utilisé comme milieu poreux. De même, tout type de matériau granulaire ayant un taux d'empilement compatible avec le passage de la phase liquide de la barbotine peut être utilisé comme milieu poreux. Le milieu poreux 120 comporte un conduit 121 en communication à la fois avec le port d'injection 134 de l'enceinte 130 et le canal 1111 du moule en matériau poreux 110 afin de permettre l'injection de la barbotine dans la texture fibreuse 10.

Le volume de vide présent dans le milieu poreux est de préférence supérieur à la quantité ou volume de la phase liquide de la barbotine qui doit être injectée dans la texture fibreuse. Cela permet d'évacuer la totalité de la phase liquide des parois du moule poreux lorsqu'un tirage de vide est réalisé au niveau du ou des évents d'évacuation et/ou lors de l'application de la pression dans le port d'injection.

Selon une variante de réalisation, le moule en matériau poreux présente des dimensions externes équivalentes au volume interne de l'enceinte. Dans ce cas, le moule en matériau poreux est directement en contact avec les parois internes de l'enceinte. Dans ce cas, on dimensionne de préférence le moule en matériau poreux de manière à ce qu'il présente un volume de vide supérieur à la quantité ou volume de la phase liquide de la barbotine qui doit être injectée dans la texture fibreuse. Cela permet d'optimiser le remplissage de la texture fibreuse lorsqu'un tirage de vide est réalisé au niveau du ou des évents d'évacuation.

Le moule en matériau poreux 110 peut être par exemple réalisé à partir d'une résine poreuse. Dans ce cas, les parties 111 et 112 du moule 110 sont elles-mêmes réalisées par moulage en injectant et en polymérisant une résine entre un moule et un contre-moule, le moule présentant une forme correspondant aux empreintes 1110 et 1120 des parties 111 et 112 si lesdites empreintes sont identiques. Dans le cas contraire, on utilise un moule différent pour chaque partie 111 et 112 de manière à former dans chacune de celle-ci une empreinte différente. Les caractéristiques du réseau poreux au sein du moule, notamment en termes de taille de pores et de taux de porosité, peuvent être contrôlées en ajustant le ou les cycles de polymérisation en fonction de la nature de la résine utilisée. On dispose, par conséquent, d'autant de choix de réseaux de porosité qu'il y a de résines poreuses disponibles. A titre d'exemples non limitatifs, les résines poreuses suivantes peuvent être utilisées pour la réalisation du moule en matériau poreux :
- Gil-Resin^{®} T avec des pores ayant une taille comprise entre 8 et 13 µm,
- Gil-Resin^{®} F+ avec des pores ayant une taille comprise entre 4 et 7 µm,
- SamaPore avec des pores ayant une taille comprise entre 3 et 10 µm,
- Microplast Fine avec des pores ayant une taille moyenne de 7 µm.

Le moule 110, ou plus précisément les parties 111 et 112 constituant le moule 110, peuvent être réalisées à partir d'un matériau poreux rigide tel que du polytétrafluoroéthylène (PTFE) microporeux comme les produits « microporous PTFE » vendus par la société Porex^{®}. On peut par exemple utiliser pour réaliser la moule 110, le matériau PM 0130 commercialisé par la société Porex^{®} présentant une taille de pores comprise entre 1 µm et 2 µm. Les empreintes 1110 et 1120 sont chacune respectivement réalisées par thermoformage ou usinage du matériau poreux.

A titre d'exemple non limitatif, le moule 110 peut également être réalisé avec du plâtre.

Le moule en matériau poreux 110 permet le drainage du milieu liquide de la barbotine à l'extérieur de la texture fibreuse 10 et son évacuation par j'évent 135 du fait de l'application d'un gradient de pression entre l'évent 135 et le port d'injection 134.

A titre d'exemple, la taille moyenne des pores (D50) du moule en matériau poreux peut par exemple être comprise entre 1 µm et 10 µm.

La figure 3 illustre la configuration obtenue durant l'injection d'une barbotine 150 et le drainage du milieu ou phase liquide de celle-ci. Avant l'injection de la barbotine dans l'outillage, un tirage au vide a été réalisé au sein du moule en matériau poreux afin de remplir ensuite au maximum la texture fibreuse avec la barbotine. Le tirage au vide peut être réalisé par pompage au niveau de l'évent d'évacuation 135.

Sur la figure 3, la barbotine 150 a été injectée sous pression par le port d'injection 121 et transportée jusqu'à la texture fibreuse 10 par le conduit 121 et le canal 1111 de manière à pénétrer dans la texture fibreuse 10. Les particules réfractaires 1500 présentes dans la barbotine 150 sont destinées à permettre la formation d'une matrice céramique réfractaire dans la porosité de la texture fibreuse 10. Cette matrice céramique réfractaire peut, dans un exemple de réalisation, être une matrice d'oxyde réfractaire.

La barbotine peut par exemple être une suspension d'une poudre d'alumine dans de l'eau. La poudre d'alumine utilisée peut être une poudre d'alumine alpha commercialisée par la société Baikowski sous la dénomination SM8.

Plus généralement, la barbotine peut être une suspension comportant des particules céramiques réfractaires présentant une dimension particulaire moyenne comprise entre 0,1 µm et 10 µm. La teneur volumique en particules céramiques réfractaires dans la barbotine peut, avant l'injection, être comprise entre 15% et 40%. Les particules céramiques réfractaires peuvent comporter un matériau choisi parmi :
l'alumine, la mullite, la silice, les aluminosilicates, les aluminophosphates,
les carbures, les borures, les nitrures et les mélanges de tels matériaux.
En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu ou phase liquide de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1,5 et 4. La barbotine peut, en outre, comporter un liant organique comme de l'alcool polyvinylique (PVA) lequel est notamment soluble dans l'eau.

Comme illustré sur la figure 3, les particules céramiques réfractaires 1500 sont présentes après injection de la barbotine 150 dans la porosité de la texture fibreuse 10. Les flèches représentent le mouvement du milieu ou phase liquide 1501 de la barbotine drainé par le moule en matériau poreux 110.

Un pompage P peut, en outre, être réalisé au niveau de l'évent de sortie 135 durant le drainage, par exemple au moyen d'une pompe à vide primaire. La réalisation d'un tel pompage permet d'améliorer le drainage et de sécher plus rapidement la texture fibreuse.

Dans cette configuration, le moule en matériau poreux 110 permet de retenir dans la texture fibreuse 10 les particules céramiques réfractaires 1500 initialement présentes dans la barbotine et que tout ou partie de ces particules se déposent par filtration dans la texture fibreuse 10.

Grâce à l'utilisation du moule en matériau poreux 110, le milieu ou phase liquide 1501 de la barbotine peut être drainé hors de la texture fibreuse 10 dans toutes les directions, le milieu ou phase liquide 1501 circulant ensuite dans le milieu poreux 120 jusqu'à l'évent 135 par lequel il est évacué hors de l'outillage d'injection 100. Ce drainage du milieu liquide dans toutes les directions permet de favoriser un dépôt par sédimentation homogène et dense des particules céramiques réfractaires 1500 dans la texture fibreuse 10 et d'obtenir, par conséquent, un taux volumique de matrice élevé dans la pièce finale.

En outre, le moule en matériau poreux 110 étant maintenu dans une enceinte en matériau rigide 130, celui-ci peut résister aux pressions d'injection de la barbotine chargée dans la texture ainsi qu'à celles exercées par le pompage pour l'évacuation du milieu liquide de la barbotine.

Une fois les étapes d'injection et de drainage effectuées, on obtient une préforme fibreuse 15 chargée de particules céramiques réfractaires, par exemple de particules d'oxyde céramique réfractaire ou d'alumine.

La préforme obtenue est ensuite séchée puis démoulée, la préforme pouvant conserver après démoulage la forme adoptée dans la cavité de moulage.

La préforme est ensuite soumise à un traitement thermique de frittage, par exemple sous air à une température comprise entre 1000°C et 1200°C afin de fritter les particules céramiques réfractaires et ainsi former une matrice céramique réfractaire dans la porosité de la préforme fibreuse. On obtient alors une pièce en matériau composite, par exemple une pièce en matériau composite Oxyde/Oxyde, munie d'un renfort fibreux formé par la préforme fibreuse et présentant un taux volumique de matrice élevé avec une répartition homogène de la matrice céramique réfractaire dans tout le renfort fibreux.

Une pièce en matériau composite CMC autre que Oxyde/Oxyde peut être obtenue de la même façon en réalisant la texture fibreuse avec des fibres de carbure de silicium et/ou de carbone et en utilisant une barbotine chargée de particules de carbure (par exemple de SiC), de borure (par exemple de TiB₂) ou de nitrure (par exemple de Si₃N₄).

## Revendications

1. Procédé de fabrication d'une pièce en matériau composite comprenant les étapes suivantes :
- formation d'une texture fibreuse (10) à partir de fibres céramiques réfractaires,
- placement de la texture fibreuse (10) dans un outillage d'injection (100),
- injection sous pression d'une barbotine (150) contenant une poudre de particules céramiques réfractaires (1500) dans la texture fibreuse (10),
- drainage du liquide (1501) de la barbotine (150) ayant traversé la texture fibreuse (10) et rétention de la poudre de particules céramiques réfractaires à l'intérieur de ladite texture de manière à obtenir une préforme fibreuse (15) chargée de particules céramiques réfractaires (1500),
- séchage de la préforme fibreuse (15),
- démoulage de la préforme fibreuse (15), et
- frittage des particules céramiques réfractaires présentes dans la préforme fibreuse afin de former une matrice réfractaire dans ladite préforme,
**caractérisé en ce que** l'outillage d'injection comprend un moule en matériau poreux (110) comportant un logement interne (113) dans lequel la texture fibreuse (10) est placée, la barbotine (150) étant injectée dans la texture fibreuse (10) par au moins un port d'injection (134) présent sur l'outillage d'injection et débouchant dans le logement interne (113) du moule en matériau poreux (110), l'outillage comprenant en outre une enceinte en matériau rigide (130) dans laquelle le moule en matériau poreux (110) est maintenu pendant l'injection sous pression de la barbotine (150) et le drainage du liquide (1501) de ladite barbotine, le liquide (1501) de la barbotine étant évacué par au moins un évent (135) présent sur l'enceinte en matériau rigide.

2. Procédé selon la revendication 1, **caractérisé en ce que** le moule en matériau poreux (110) présente une taille inférieure au volume interne de l'enceinte en matériau rigide (130) et **en ce que** le volume présent entre le moule en matériau poreux et l'enceinte en matériau rigide est comblé par un milieu poreux (120).

3. Procédé selon la revendication 2, **caractérisé en ce que** le milieu poreux (120) est constitué au moins de sable ou d'une mousse.

4. Procédé selon l'une quelconque des revendications 2 à 3, **caractérisé en ce que** le volume de vide présent dans le milieu poreux (120) est supérieur au volume de la phase liquide (1501) de la barbotine
(150) injectée dans la texture fibreuse (10).

5. Procédé selon l'une quelconque des revendications 1 à 4, **caractérisé en ce que** le moule (110) est en un matériau choisi parmi un des matériaux suivants : résine poreuse et plâtre.

6. Procédé selon l'une quelconque des revendications 1 à 5, **caractérisé en ce que**, lors de l'étape de la formation de la texture fibreuse (10), les fils sont tissés suivant un tissage tridimensionnel ou multicouche.

7. Procédé selon l'une quelconque des revendications 1 à 6, **caractérisée en ce que** les fils de la texture fibreuse (10) sont formés de fibres constituées d'un ou plusieurs des matériaux suivants : l'alumine, la mullite, la silice, un aluminosilicate, un borosilicate, du carbure de silicium et du carbone.

8. Procédé selon l'une quelconque des revendications 1 à 7, **caractérisé en ce que** les particules céramiques réfractaires (1500) sont en un matériau choisi parmi : l'alumine, la mullite, la silice, un aluminosilicate, un aluminophosphate, la zircone, un carbure, un borure et un nitrure.

9. Procédé selon l'une quelconque des revendications 1 à 8, **caractérisé en ce que** la pièce en matériau composite obtenue constitue une aube de turbomachine.

## Patentansprüche

1. Verfahren zur Herstellung eines Bauteils aus Verbundwerkstoff, das die folgenden Schritte umfasst:
- Bilden einer faserigen Textur (10) ausgehend von feuerfesten Keramikfasern,
- Platzieren der faserigen Textur (10) in einem Spritzwerkzeug (100),
- Einspritzen eines Schlickers (150), der ein Pulver aus feuerfesten Keramikpartikeln (1500) enthält, unter Druck in die Fasertextur (10),
- Abführen der Flüssigkeit (1501) des Schlickers (150), die die faserige Textur (10) durchquert hat, und Zurückhalten des Pulvers aus feuerfesten Keramikpartikeln im Inneren der Textur, derart, dass eine faserige Vorform (15) erhalten wird, die mit feuerfesten Keramikpartikeln (1500) gefüllt ist,
- Trocknen der faserigen Vorform (15),
- Entformen der faserigen Vorform (15), und
- Sintern der feuerfesten Keramikpartikel, die in der faserigen Vorform vorhanden sind, um eine feuerfeste Matrix in der Vorform zu bilden,
**dadurch gekennzeichnet, dass** das Spritzwerkzeug eine Form aus porösem Material (110) umfasst, die eine innere Aufnahme (113) umfasst, in der die faserige Textur (10) platziert wird, wobei der Schlicker (150) durch mindestens eine Einspritzöffnung (134), die auf dem Spritzwerkzeug vorhanden ist und in die innere Aufnahme (113) der Form aus porösem Material (110) mündet, in die faserige Textur (10) eingespritzt wird, wobei das Werkzeug ferner eine Kammer aus starrem Material (130) umfasst, in der die Form aus porösem Material (110) während des Einspritzens des Schlickers (150) unter Druck und des Abführens der Flüssigkeit (1501) des Schlickers gehalten wird, wobei die Flüssigkeit (1501) des Schlickers durch mindestens eine Austrittsöffnung (135) abgelassen wird, die auf der Kammer aus starrem Material vorhanden ist.

2. Verfahren nach Anspruch 1, **dadurch gekennzeichnet, dass** die Form aus porösem Material (110) eine Größe aufweist, die kleiner als das Innenvolumen der Kammer (130) aus starrem Material ist, und dadurch, dass das Volumen, das zwischen der Form aus porösem Material und der Kammer aus starrem Material vorhanden ist, mit einem porösen Medium (120) ausgefüllt ist.

3. Verfahren nach Anspruch 2, **dadurch gekennzeichnet, dass** das poröse Medium (120) aus mindestens Sand oder einem Schaum besteht.

4. Verfahren nach einem der Ansprüche 2 bis 3, **dadurch gekennzeichnet, dass** das Volumen des Hohlraums, der in dem porösen Medium (120) vorhanden ist, größer als das Volumen der flüssigen Phase (1501) des in die faserige Textur (10) eingespritzten Schlickers (150) ist.

5. Verfahren nach einem der Ansprüche 1 bis 4, **dadurch gekennzeichnet, dass** die Form (110) aus einem Material ist, das aus einem der folgenden Materialien ausgewählt ist: poröses Harz und Gips.

6. Verfahren nach einem der Ansprüche 1 bis 5, **dadurch gekennzeichnet, dass** beim Schritt des Bildens der faserigen Textur (10), die Fäden gemäß einem dreidimensionalen oder mehrschichtigen Geflecht gewebt werden.

7. Verfahren nach einem der Ansprüche 1 bis 6, **dadurch gekennzeichnet, dass** die Fäden der faserigen Textur (10) aus Fasern gebildet werden, die aus einem oder mehreren der folgenden Materialien bestehen: Aluminiumoxid, Mullit, Siliziumoxid, einem Aluminosilikat, einem Borosilikat, Siliziumkarbid und Kohlenstoff.

8. Verfahren nach einem der Ansprüche 1 bis 7, **dadurch gekennzeichnet, dass** die feuerfesten Keramikpartikel (1500) aus einem Material sind, das ausgewählt wird aus: Aluminiumoxid, Mullit, Siliziumoxid, einem Aluminosilikat, einem Aluminophosphat, Zirkonium, einem Carbid, einem Borid und einem Nitrid.

9. Verfahren nach einem der Ansprüche 1 bis 8, **dadurch gekennzeichnet, dass** das erhaltene Bauteil aus Verbundmaterial eine Turbomaschinenschaufel bildet.

## Claims

1. A method of fabricating a composite material part, the method comprising the following steps:
· forming a fiber texture (10) from refractory ceramic fibers;
· placing the fiber texture (10) in injection tooling (110);
· injecting under pressure a slurry (150) containing a powder of refractory ceramic particles (1500) into the fiber texture (10);
· draining the liquid (1501) of the slurry (150) that has passed through the fiber texture (10), while retaining the powder of refractory ceramic particles within said texture so as to obtain a fiber preform (15) that is filled with refractory ceramic particles (1500);
· drying the fiber preform (15);
· unmolding the fiber preform (15); and
· sintering the refractory ceramic particles present in the fiber preform in order to form a refractory matrix in said preform;
the method being **characterized in that** the injection tooling comprises a mold of porous material (110) including an internal housing (113) in which the fiber texture (10) is placed, the slurry (150) being injected into the fiber texture (10) via at least one injection port (134) present in the injection tooling and leading into the internal housing (113) of the porous material mold (110), the tooling further comprising an enclosure (130) made of rigid material in which the porous material mold (110) is held while injecting the slurry (150) under pressure and while draining the liquid (1501) of said slurry, the liquid (1501) of the slurry being discharged via at least one vent (135) present in the rigid material enclosure.

2. A method according to claim 1, **characterized in that** the porous material mold (110) presents a size smaller than the inside volume of the rigid material enclosure (130), and **in that** the volume present between the porous material mold and the metal material enclosure is filled in with a porous medium (120).

3. A method according to claim 2, **characterized in that** the porous medium (120) is constituted at least by sand or a foam.

4. A method according to any one of claims 2 to 3, **characterized in that** the empty volume present in the porous medium (120) is greater than the volume of the liquid phase (1501) of the slurry (150) injected into the fiber texture (10).

5. A method according to any one of claims 1 to 4, **characterized in that** the mold (110) is made of a material selected from one of the following materials:
porous resin and plaster.

6. A method according to any one of claims 1 to 5, **characterized in that**, during the step of forming the fiber texture (10), the yarns are woven with a three-dimensional or multilayer weave.

7. A method according to any one of claims 1 to 6, **characterized in that** the yarns of the fiber texture (10) are made of fibers constituted by one or more of the following materials: alumina; mullite; silica; an aluminosilicate; a borosilicate; silicon carbide; and carbon.

8. A method according to any one of claims 1 to 7, **characterized in that** the refractory ceramic particles (1500) are made of a material selected from: alumina; mullite; silica; an aluminosilicate; an aluminophosphate; zirconia; a carbide; a boride; and a nitride.

9. A method according to any one of claims 1 to 8, **characterized in that** the resulting part made of composite material constitutes a turbine engine blade.
